# EUROPÄISCHE PATENTSCHRIFT

(11) **EP 3 017 347 B1**
(45) Veröffentlichungstag und Bekanntmachung des Hinweises auf die Patenterteilung: **01.05.2019**
(21) Anmeldenummer: 14729264.3
(22) Anmeldetag: 02.06.2014
(51) Int. Cl.: G06F 1/03, G01F 23/26

(54) **MESSVORRICHTUNG FÜR DIE AUTOMATISIERUNGSTECHNIK MIT SIGNALGENERATOR**
MEASURING APPARATUS FOR AUTOMATION TECHNOLOGY WITH SIGNAL GENERATOR
DISPOSITIF DE MESURE POUR LA TECHNIQUE D'AUTOMATION AVEC GÉNÉRATEUR DE SIGNAUX

(30) Priorität: 05.07.2013 DE 102013107120
(43) Veröffentlichungstag der Anmeldung: 11.05.2016
(73) Patentinhaber: Endress+Hauser SE+Co. KG, 79689 Maulburg (DE)
(72) Erfinder: RÜMMELE-WERNER, Stefan, 79650 Schopfheim (DE); FRÜHAUF, Dietmar, 79539 Lörrach (DE); WERNET, Armin, 79618 Rheinfelden (DE); UPPENKAMP, Kaj, 79664 Wehr (DE); BECHTEL, Gerd, 79585 Steinen (DE)
(74) Vertreter: Andres, Angelika Maria
(86) Internationale Anmeldenummer: PCT/EP2014/061353
(87) Internationale Veröffentlichungsnummer: WO 2015/000649

(56) Entgegenhaltungen:
- WO-A1-2010/139508
- WO-A1-2012/100873
- DE-A1- 10 229 241
- US-A1- 2004 264 547
- US-A1- 2007 299 895
- US-B1- 6 356 124

## Beschreibung

Die Erfindung betrifft einen Signalgenerator zur Erzeugung periodischer Signale für eine Messvorrichtung und, genauer gesagt, eine Messvorrichtung, bei der der Signalgenerator eingesetzt wird. Bevorzugt kommt der Signalgenerator in einer kapazitiven Messvorrichtung zum Einsatz. Ebenso kann er jedoch in einer vibronischen Messvorrichtung eingesetzt werden. Anwendungsgebiet der Messvorrichtungen ist die Automatisierungstechnik.

Zur Füllstands- oder Grenzstandmessung in flüssigen Medien werden häufig auf dem kapazitiven Messprinzip beruhende Messgeräte verwendet. Neben dem Füllstand bzw. Grenzstand können entsprechende Messgeräte auch für die Bestimmung und/oder Überwachung der elektrischen Leitfähigkeit und/oder die Permittivität des Mediums benutzt werden. Hierzu muss der Füllstand unverändert bleiben. Weiterhin lässt sich mit kapazitiven Messgeräten die Ansatzbildung an Komponenten der Messvorrichtung erkennen, die mit dem Medium in Kontakt sind.

Kapazitive Messgeräte umfassen eine Messsonde mit einer in der Regel stabförmigen Sensorelektrode und gegebenenfalls einer Guardelektrode zur Verbesserung der Messgenauigkeit bei Ansatzbildung an der Sonde. Der Füllstand des Mediums wird aus der Kapazität des von der Sondenelektrode und der Behälterwandung oder einer zweiten Elektrode gebildeten Kondensators ermittelt, wobei an die Sondenelektrode eine Wechselspannung angelegt wird. Je nach Leitfähigkeit des Mediums bildet hierbei das Medium und/oder die Sondenisolierung das Dielektrikum des Kondensators. Die Guardelektrode liegt auf dem gleichen Potential wie die Sondenelektrode und umgibt die Sondenelektrode zumindest abschnittsweise koaxial. Eine Sonde mit Guard ist beispielsweise in der DE 3212434 C2, eine Sonde ohne Guard in der WO 2006/034959 A2 beschrieben. Kapazitive Sonden zur kontinuierlichen Füllstands- oder Grenzstandbestimmung werden von der Anmelderin in unterschiedlichen Ausgestaltungen und mit verschiedenen Sondenlängen beispielsweise unter der Bezeichnung LIQUICAP hergestellt und vertrieben.

Bei kapazitiven Sonden zeigt sich folgendes Dilemma: Um Resonanzeffekte, die die Messung stören, zu vermeiden, ist es vorteilhaft, die Signalfrequenz der an die Messsonde angelegten Wechselspannung umso geringer zu wählen, je länger die Sonde ist. Höhere Signalfrequenzen haben aber den Vorteil, dass hier die Empfindlichkeit bezüglich Ansatzbildung geringer ist als bei niedrigeren Signalfrequenzen.

Um eine für Sonden beliebiger Länge kompatible Elektronikeinheit bereit zu stellen, wird daher bei bekannten kapazitiven Messgeräten eine Signalfrequenz, oftmals auch als Messfrequenz bezeichnet, verwendet, welche für alle Sondenlängen geeignet scheint. Daher liegt insbesondere die Signalfrequenz bei kürzeren Sonden unterhalb der für diese kürzeren Sonden optimalen Signalfrequenz.

Ein weiteres Problem zeigt sich, wenn das Medium eine Leitfähigkeit aufweist, die in einem von der Permittivität (dielektrische Leitfähigkeit) abhängigen und einem von der Permittivität unabhängigen Übergangsbereich liegt. Der Füllstand bzw. der Grenzstand ist in diesem Übergangsbereich mittels eines kapazitiven Messgeräts nicht zuverlässig bestimmbar. Folglich ist die kapazitive Füllstandsmessung bei einem derartigen Medium nicht anwendbar.

Aus der WO 2012/100 873 A1 ist eine Vorrichtung zur kapazitiven Bestimmung und/oder Überwachung des Füllstands eines Mediums in einem Behälter bekannt geworden, das eine Lösung für die zuvor geschilderten Probleme liefert. Das bekannte kapazitive Messgerät weist eine Sondeneinheit mit mindestens einer Sondenelektrode und mit einer Elektronikeinheit auf. Die Elektronikeinheit beaufschlagt zumindest die Sondenelektrode mit einem elektrischen Sendesignal. Nachfolgend empfängt sie das elektrische Antwortsignal von der Sondeneinheit und wertet es aus. Insbesondere wird die Sondenelektrode sukzessive mit Messsignalen beaufschlagt, die sich aus aufeinanderfolgenden diskreten Signalfrequenzen eines definierten Frequenzbereichs zusammensetzen. Anhand eines Frequenzsuchlaufs bzw. anhand eines sog. Frequenzsweeps ermittelt die Elektronikeinheit - in Abhängigkeit von den aktuellen Anwendungsparametern in dem Prozess - die optimale Signalfrequenz bzw. Messfrequenz. Diese Anwendungsparameter sind beispielsweise die Sondenlänge, etwaige Ansatzbildung an der Sonde, die Beschaffenheit des Mediums. Nachfolgend bestimmt die Elektronikeinheit aus dem Antwortsignal auf das Messsignal mit der optimalen Signalfrequenz den Füllstand, den Grenzstand oder sonstige physikalische Parameter des Mediums.

Auf dem Markt erhältliche kapazitive Messgeräte ermöglichen bislang keinen Frequenzsweep. Bei den bekannten "statischen" Messgeräten wird zur Erzeugung des Grundsignals ein durch einen Timer des Mikrocontrollers erzeugtes Rechtecksignal verwendet. Durch ein Tiefpassfilter höherer Ordnung werden die Oberwellen des Rechtecksignals so stark bedämpft, dass am Ausgang des Tiefpassfilters ein Sinussignal ansteht, das über eine Treiberstufe auf die Messsonde gegeben wird. Gemessen werden die Amplitude und die Phase des Antwortsignals, also des Wechselstroms, der durch die Messsonde fließt. Diese bekannte Variante wird üblicherweise mit einer Signalfrequenz zwischen 30kHz und 5 MHz betrieben.

Weiterhin vertreibt die Anmelderin kapazitive Messgeräte, die als Sinusgenerator einen Quarzoszillator verwenden. Hierbei wird die Oszillationsfrequenz einer Oszillatorschaltung durch die Eigenfrequenz des Quarzes bzw. eines ihrer vielfachen bestimmt und stabil gehalten. Im Promillebereich kann diese Frequenz über einen Ziehkondensator geändert werden; es ist jedoch nicht möglich, die Schwingfrequenz über einen ausgedehnten Frequenzbereich zu verändern.

Eine weitere Variante, die in aktuellen Messgeräten der Anmelderin eingesetzt wird, basiert auf einem ASIC. Für die Auswertung des Sensors können nur wenige verschiedene Frequenzen in einem eingeschränkten Frequenzbereich gewählt werden, welche jedoch zur Laufzeit nicht veränderbar sind.

Aus der WO 2010/139 508 A1 ist ein Verfahren zur Bestimmung oder Überwachung eines vorbestimmten Füllstandes, der Phasengrenze oder der Dichte eines Mediums in einem Behälter mit einer schwingfähigen Einheit bekannt geworden. Mittels eines Frequenzsuchlaufs (Sweep) wird die schwingfähige Einheit innerhalb eines vorbestimmbaren Frequenzbereichs im Arbeitsbereich der schwingfähigen Einheit sukzessive mit aufeinanderfolgenden diskreten Erregerfrequenzen zu Schwingungen angeregt, wobei die entsprechenden Schwingungen der schwingfähigen Einheit in Form von Empfangssignalen empfangen werden. Über den Frequenzsuchlauf wird die Erregerfrequenz ermittelt, bei der die schwingfähige Einheit mit einer Schwingfrequenz schwingt, die eine vorgegebene Phasenverschiebung zwischen dem Sendesignal und dem Empfangssignal aufweist, und wobei die Sende-/Empfangseinheit (S/E) die schwingfähige Einheit mit der ermittelten Signal- bzw. Schwingfrequenz zu Schwingungen anregt oder wobei der nachfolgende Frequenzsuchlauf gestartet wird. Vibronische Sensoren, die mit dem zuvor beschriebenen Verfahren betrieben werden könnten, werden von der Anmelderin unter den Bezeichnungen LIQUIPHANT, SOLIPHANT angeboten und vertrieben. Bei den vibronischen Sensoren kann der Signalgenerator gleichfalls zum Einsatz kommen.

Für die Realisierung dynamischer Signalgeneratoren können Switched-Capacitor-Filter (auch als SC-Filter bekannt) verwendet werden. Hierbei wird durch Filterung der Oberwellen aus einem Rechtecksignal ein Sinussignal erzeugt, dessen Signalfrequenz über die Taktquelle eingestellt wird: Ändert sich die Taktfrequenz, ändern sich die Signalfrequenz und die Übertragungsfunktion des Filters. Um die Aliasing-Effekte bei verschiedenen Signalfrequenzen zu unterdrücken, muss weiterhin die Grenzfrequenz des analogen Tiefpasses am Ausgang des Signalgenerators verändert werden. Bevorzugt erfolgt dies durch ein digitales Potentiometer. Der Vorteil dieses bekannten Signalgenerators besteht darin, dass mit wenigen Komponenten ein Sinussignal mit geringem Klirrfaktor und variabler Frequenz bereitgestellt werden kann. Die Nachteile der bekannten Lösung sind: es wird ein variabler Taktgeber benötigt. Für den Betrieb des SC-Filters sind Taktfrequenzen notwendig, die viel höher sind als die Signalfrequenz.

Entsprechende Lösungen benötigen relativ viel Energie. Der Faktor liegt in einem Bereich von 50 bis 100 (z.B. Sandler, H. M. ; Sedra , A.S.: Sine-Wave generation using a highorder lowpass switched-capacitor filter. IEEE. April 1986). US 2004/264547 A1 offenbart einen Signalgenerator zur Erzeugung periodischer Signale, mit einer Speichereinheit, in der zu jeder der diskreten Signalfrequenzen die Amplitudenwerte der entsprechenden periodischen Signale in Form von zumindest einer Suchtabelle gespeichert sind. DE 102 29 241 A1 offenbart einen Funktionsgenerator zur Erzeugung periodischer Signale, mit einer Speichereinheit, in der zu jeder der diskreten Signalfrequenzen die Amplitudenwerte der entsprechenden periodischen Signale in Form von zumindest einer Suchtabelle, gespeichert sind, wobei eine Suchtabelle dynamisch erzeugt wird.

Der Erfindung liegt die Aufgabe zugrunde, einen kostengünstigen dynamischen Signalgenerator in einem Messgerät der Automatisierungstechnik bereitzustellen.

Die Aufgabe wird gemäß Anspruch 1 gelöst.

Bei den periodischen Signalen kann es sich im Prinzip um sinusförmige Signale, um Dreiecks- oder Rechtecksignale handeln. Bei kapazitiven Messgeräten werden üblicherweise sinusförmige Signale verwendet. Der Taktgeber kann als separate Einheit ausgestaltet oder Teil der Steuer- und/oder Recheneinheit sein. Bei der Steuer- und/oder Recheneinheit kann es sich beispielsweise um einen Mikroprozessor, einen Mikrocontroller, einen DSP und/oder bevorzugt um einen FPGA handeln. Ebenso kann ein CPLD oder ein ASIC eingesetzt werden.

Die Aufgabe wird bezüglich eines Messgeräts zur kapazitiven Bestimmung und/oder Überwachung des Füllstands oder des Grenzstands eines Mediums in einem Behälter oder eines anderweitigen physikalischen Parameters gemäß Anspruch 9 gelöst.

Eine weitere Lösung der Aufgabe im Hinblick auf einen Vibronischen Sensor zur Bestimmung oder Überwachung eines vorbestimmten Füllstandes, der Phasengrenze oder der Dichte eines Mediums in einem Behälter mit einer schwingfähigen Einheit ist gemäß Anspruch 14 gegeben.

Das erfindungsgemäße kapazitive oder vibronische Messgerät, das den dynamischen Signalgenerator verwendet, hat die folgenden Vorteile gegenüber den bekannten Lösungen:
- Der Signalgenerator bzw. das erfindungsgemäße kapazitive oder vibronische Messgerät decken den gesamten für die kapazitive oder vibronische Messung erforderlichen Frequenzbereich ab. Dieser Frequenzbereich umfasst im Falle eines kapazitiven Messgeräts zumindest den Bereich von 50 kHz bis 5 MHz. Bevorzugt liegt die Abtastfrequenz bei 20 MHz . Es versteht sich von selbst, dass die zuvor genannten Zahlen beispielhaft sind.
- In der Automatisierungstechnik erfolgen die Messungen oftmals in explosionsgefährdeten Bereichen. Hier ist der 4-20 mA Standard vorgeschrieben, so dass die zur Verfügung stehende Energie für ein Messgerät beschränkt ist. Der Signalgenerator bzw. das erfindungsgemäße kapazitive Messgerät können mit dieser geringen zur Verfügung stehenden Energie betrieben werden. So kann eine Leistungsaufnahme des Elektronikteils von nur wenigen mW erreicht werden.
- Da bei der erfindungsgemäßen Lösung ein statisches Filter eingesetzt wird, müssen keine variablen, relativ teuren und auch fehleranfälligen Bauteile, wie z.B. digitale Potentiometer, verwendet werden. Auch entfällt ein Abgleich der Filterkoeffizienten auf die jeweils eingestellte diskrete Signalfrequenz, die bei der Verwendung eines anpassbaren Filters zwingend notwendig wäre. Infolge der Verwendung eines statischen Filters ist der Signalgenerator einfach, robust und kostengünstig. Hinzu kommt, dass bei den käuflichen digitalen Potentiometern heutzutage der für die kapazitive Messtechnik benötigte Frequenzbereich zu gering ist. Die technische Realisierung eines für die kapazitive Messtechnik geeigneten Filters würde einen hohen technischen Aufwand erfordern.
- Da über einen Frequenzsweep die optimale Signalfrequenz in der aktuellen Applikation bestimmt wird, ist die Messgenauigkeit des kapazitiven oder vibronischen Messgeräts sehr gut.

Der Signalgenerator sieht vor, dass in der Speichereinheit zu jeder der diskreten Signalfrequenzen die Amplitudenwerte des entsprechenden periodischen Signals in Abhängigkeit von der Abtastfrequenz in Form von zumindest einer Suchtabelle, einer sog. Lookup Table, gespeichert oder abspeicherbar sind.

Eine einfache Methode, ein periodisches Signal durch einen digitalen Baustein zu erzeugen, ist die Verwendung einer Look-up Table (LUT) bzw. einer Suchtabelle. Bei dieser Methode der Signalgenerierung werden die einzelnen Amplitudenwerte des gewünschten Signalverlaufs entweder im Voraus abgetastet oder berechnet und anschließend der Reihe nach in einem Ringspeicher, der LUT, abgelegt (→Steuereinheit) oder vom System selbst berechnet und dann in der LUT abgespeichert (→ Steuer- und Recheneinheit). Anschließend durchläuft ein Zähler mit einer vorgegebenen Taktfrequenz den Adressbereich des verwendeten Ringspeichers und die einzelnen Amplitudenwerte des Signals werden ausgelesen und über einen Digital-Analog-Wandler DAC ausgegeben. Für dieses Verfahren gibt es mehrere Varianten. Bevorzugt verwendet die Speichereinheit in Verbindung mit der erfindungsgemäßen Lösung eine Integer Delta Implementierung.

Die Integer Delta Implementierung beschreibt, dass die Amplitudenwerte eines periodischen Signals für eine Periode in äquidistanten Zeitabständen im Speicher abgelegt und anschließend der Reihe nach ausgelesen werden.

Die erfindungsgemäße Lösung verwendet diese Methode der Speicherung und des Auslesens. Allerdings werden die Amplitudenwerte für jede Signalfrequenz dynamisch ermittelt und dann in einem Speicher abgelegt.

Insbesondere wird bei der Integer Delta Implementierung eine Periode eines z.B. Sinussignals in äquidistanten Abständen im Bereich 0 ... 2 π abgetastet oder berechnet. Das Sinussignal wird dann durch Inkrementieren von der Speicheradresse mit konstanter Taktrate erreicht. Als Adressregister wird hierbei ein Zähler verwendet, der die einzelnen Zeilen der LUT auswählt. Der gespeicherte Wert wird dann über einen DAC ausgegeben. Da der Zähler bei einem Überlauf einfach wieder bei 0 weiter zählt, entsteht ein kontinuierliches Signal. Die Signalfrequenz kann hierbei einerseits über die Taktfrequenz und andererseits über die Anzahl der Stützpunkte pro Periode gewählt werden Eine weitere Methode zur Erzeugung periodischer Signale, insbesondere von Cosinus- und Sinusschwingungen, sind iterative Algorithmen, z.B. der CORDIC-Algorithmus, wobei CORDIC die Abkürzung von COordiante Rotation Digital Computing ist.

Beim CORDIC Algorithmus handelt es sich um ein iteratives Verfahren für die Berechnung der Amplitudenwerte von sinus- oder cosinusförmigen Signalen in digitalen Rechnern. Hierzu wird ein vorgegebener Drehwinkel auf dem Einheitskreis mit Hilfe von Winkelabschnitten iterativ approximiert - ohne Verwendung eines Multiplizierers, was Ressourcen spart, da multiplikative Operationen und die Verarbeitung von trigonometrischen Funktionen üblicherweise sehr ressourcenintensiv sind. Mittels des CORDIC Algorithmus können die Amplitudenwerte der Signale mit wenig Rechenaufwand zur Laufzeit berechnet werden. Die Ausgabefrequenz ist hierbei frei wählbar. Allerdings wird auf Grund der iterativen Arbeitsweise eine um ein vielfaches höhere Taktfrequenz als die auszugebende Signalfrequenz benötigt. Darüber hinaus lässt sich ein CORDIC-Algorithmus einfach in einem FPGA ( = Field Programmable Gate Array) oder in einem Gate-Array-Chip realisieren.

Alternativ können zur Erzeugung von periodischen Signalen auch rekursive Algorithmen verwendet werden. Rekursive Algorithmen werden beispielsweise als digitale Filter verwendet und sind insbesondere als IIR-Filter bekannt. Der Vorteil dieser Methode der Signalerzeugung ist darin zu sehen, dass kaum Speicherplatz für die Signalerzeugung benötigt wird. Für die Berechnung der Schwingung, beispielsweise in einem DSP, werden allerdings mehrere Zyklen benötigt. Die Recheneinheit, die zur Berechnung der Amplitudenwerte verwendet wird, muss also mit einer Frequenz getaktet werden, die um ein Vielfaches höher ist als die Frequenz des erzeugten Signals. Weitere Information zu Look-up Tables und rekursiven Algorithmen findet sich in IEEE. August 1998, Matic, Vladimir; Marinkovic-Nedeliclu, Verica; Tadic, Vladimir: "Comparison of digital signal processing methods for sine wave signal generation".

Bevorzugt zeichnen sich Ausgestaltungen des dynamisch anpassbaren Signalgenerators und das erfindungsgemäße kapazitive oder vibronische Messgerät, in denen der Signalgenerator implementiert ist, dadurch aus, dass hier eine Kombination von zumindest einer Look-up Table und einem Rechenalgorithmus, insbesondere dem CORDIC Algorithmus, verwendet wird. Mittels des Rechenalgorithmus können die Amplitudenwerte der zur Laufzeit berechnet und dann in der LUT abgelegt werden, was eine Reduzierung des benötigten Speichers bewirkt. Look-up Tables stellen die einfachste Methode dar, um periodische Signale zu erzeugen. Mittels einer dynamisch erzeugten Suchtabelle werden für jede Signalfrequenz der Signale die Amplitudenwerte neu berechnet. Nach einem kompletten Durchlauf der Suchtabelle ist die Startadresse immer gleich Null. Somit lassen sich alle Signalfrequenzen erzeugen, die dem Quotienten aus der Taktfrequenz und einer ganzen Zahl entsprechen. So ergibt sich eine große Anzahl erzeugbarer Signalfrequenzen, für die die Amplitude in hohem Maße konstant und stabil ist. Durch die Speicherung der berechneten Werte in der Suchtabelle kann mit einer relativ niedrigen Taktfrequenz gearbeitet werden.

Gemäß einer bevorzugten Ausgestaltung der erfindungsgemäßen Lösung sind zumindest zwei Suchtabellen bzw. Look-up Tables vorgesehen, wobei über die ersten Suchtabelle die Ausgabe der Abtastpunkte einer ersten diskreten Signalfrequenz erfolgt, während in der zweiten Suchtabelle die Berechnung und Speicherung der Abtastpunkte für eine zweite diskrete Signalfrequenz parallel erfolgt.

Als vorteilhafte Ausgestaltung wird es im Zusammenhang mit der Erfindung angesehen, wenn die Steuer-/Recheneinheit die Amplitudenwerte des vom Signalgenerator erzeugten periodischen Ausgangssignals durch Anpassung des Algorithmus variiert oder einstellt, und/oder wobei die Steuereinheit die gespeicherten Amplitudenwerte durch eine binäre Schiebeoperation eines Ausgangsregisters in ihrer Größe variiert oder einstellt.

Darüber hinaus wird vorgeschlagen, dass die Steuer- und/oder Recheneinheit die Amplitudenwerte des vom Signalgenerator erzeugten periodischen Ausgangssignals derart korrigiert, dass Amplitudenänderungen infolge einer frequenzabhängigen Dämpfung durch die statische Filtereinheit oder durch anderweitige Störeffekte zumindest näherungsweise kompensiert werden. Bei den anderweitigen Störeffekten handelt es sich insbesondere um Temperatureffekte.

Im Zusammenhang mit dem Signalgenerator und dem erfindungsgemäßen kapazitiven oder vibronischen Messgerät wird vorgeschlagen, dass zumindest einige Komponenten der Steuer-/Recheneinheit bzw. der Elektronikeinheit auf einem FPGA implementiert sind. Insbesondere sind auf dem FPGA die Komponenten für die Erzeugung der zumindest einen Suchtabelle implementiert. Mit dieser Variante lassen sich die meisten diskreten Signalfrequenzen in dem vorgegebenen Frequenzbereich mit einer garantiert stabilen Amplitude generieren. So ergibt sich eine leistungsoptimierte und kostengünstige Lösung. Zudem bietet die hohe Flexibilität des FPGA - insbesondere auch im Hinblick auf die Auswertung der Antwortsignale des kapazitiven Messgeräts - viele interessante Möglichkeiten.

Die Erfindung wird anhand der nachfolgenden Figuren näher erläutert. Es zeigt:
Fig. 1: eine schematische Darstellung eines kapazitiven Füllstandsmessgeräts, in dem der Signalgenerator implementiert ist, und
Fig. 2: ein Blockschaltbild der Signalkette der einzelnen Komponenten einer vorteilhaften Ausgestaltung des Signalgenerators.

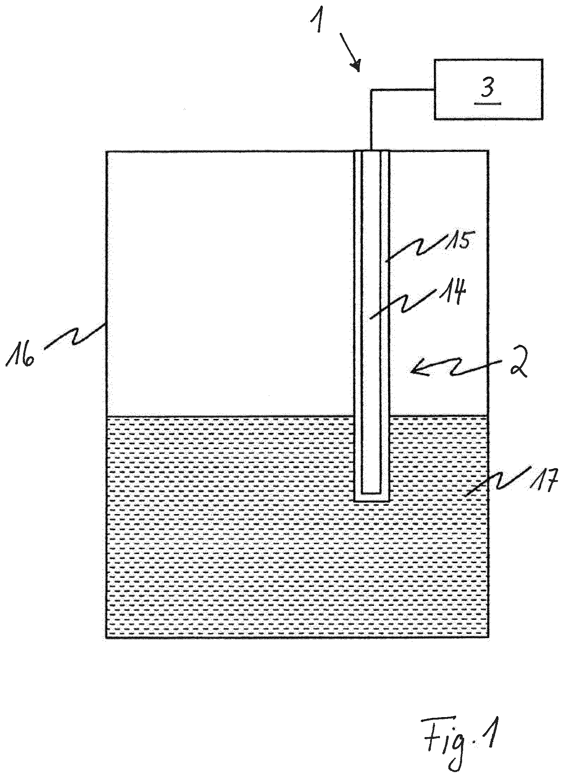

In Fig. 1 ist eine Vorrichtung zur kapazitiven Bestimmung zumindest des Füllstands eines Mediums 17 in einem Behälter 16 dargestellt, bei der der Signalgenerator 5 zum Einsatz kommt. Das kapazitive Messgerät 1 weist eine Sondeneinheit 2 auf, welche in den Behälter 16 hineinragt. In der gezeigten Ausgestaltung umfasst die Sondeneinheit 2 eine Sondenelektrode 14 und eine Isolierung 15, welche die Sondenelektrode 14 vollständig umgibt und elektrisch von dem flüssigen Medium 17 trennt. Die Gegenelektrode zur Sondenelektrode 14 bildet die Wandung des Behälters 16. Es kann jedoch gleichermaßen eine zweite Sonde mit einer Referenzelektrode in den Behälter 16 eingebracht sein. Mit einer derartigen Sondeneinheit 14 ist der Füllstand des Mediums 17 kontinuierlich bestimmbar. Die Erfindung kann jedoch auch bei Vorrichtungen zur kapazitiven Erfassung eines Grenzstandes zum Einsatz gelangen, wobei die Vorrichtung auf einer bestimmten Höhe und insbesondere frontbündig in die Wandung des Behälters 16 eingebracht ist. In einer Ausgestaltung kann die Sondeneinheit 2 weiterhin eine Guardelektrode aufweisen, welche die Sondenelektrode 14 zumindest in einem zum Prozessanschluss benachbarten Bereich koaxial umgibt und ebenfalls von einer Isolierung umgeben ist. Die darüber hinaus mit dem erfindungsgemäßen kapazitiven Messgerät 1 bestimmbaren Größen sind beispielsweise die elektrische Leitfähigkeit und/oder die Permittivität des Mediums 17. Auch lässt sich eine Ansatzbildung an der Sondeneinheit 2 erkennen.

Die im gezeigten Fall außerhalb des Behälters 16 angeordnete Elektronikeinheit 3 beaufschlagt die Sondenelektrode 14 mit einem elektrischen Signal in Form einer Wechselspannung und empfängt von der Sondenelektrode 14 ein elektrisches Antwortsignal. Das Antwortsignal ist in der Regel ein Stromsignal, welches über einen Widerstand in ein entsprechendes Spannungssignal umgewandelt wird. Dieses wird vorzugsweise dem Analog/Digital-Wandler eines Mikrocontrollers (nicht eingezeichnet) in der Elektronikeinheit 3 zugeführt. Falls eine Guardelektrode vorhanden ist, erhält diese das gleiche Sendesignal wie die Sondenelektrode 14. Die Kenngrößen des Antwortsignals, wie beispielsweise die Phasenverschiebung zum Sendesignal oder die Amplitude, hängen unter anderem davon ab, welcher Anteil der Sondeneinheit 14 von dem Medium 17 umgeben ist, so dass aus dem Antwortsignal der Füllstand des Mediums 17 kontinuierlich bestimmbar und überwachbar ist. Eine weitere Abhängigkeit ergibt sich von der elektrischen Leitfähigkeit und von der Dielektrizitätskonstanten bzw. Permittivität des Mediums. Für den Fall, dass das Medium 17 nicht leitfähig ist, ist keine Isolierung erforderlich, und es wird die Kapazität zwischen Sondenelektrode 14 und Behälter 16 mit dem Medium 17 als Dielektrikum gemessen. Für den Fall, dass das Medium 17 zumindest eine geringe Leitfähigkeit aufweist, wird zudem die Kapazität zwischen Sondenelektrode 14 und Medium 17 gemessen, wobei die Isolierung 15 das Dielektrikum des Kondensators darstellt, der aus Sondenelektrode 14 und Medium 17 gebildet wird.

Bei einer hohen Leitfähigkeit wird nur noch die Isolationskapazität gemessen. In diesem Fall ist die Messung unabhängig von dem Wert der Dielektrizitätskonstanten des Mediums 17.

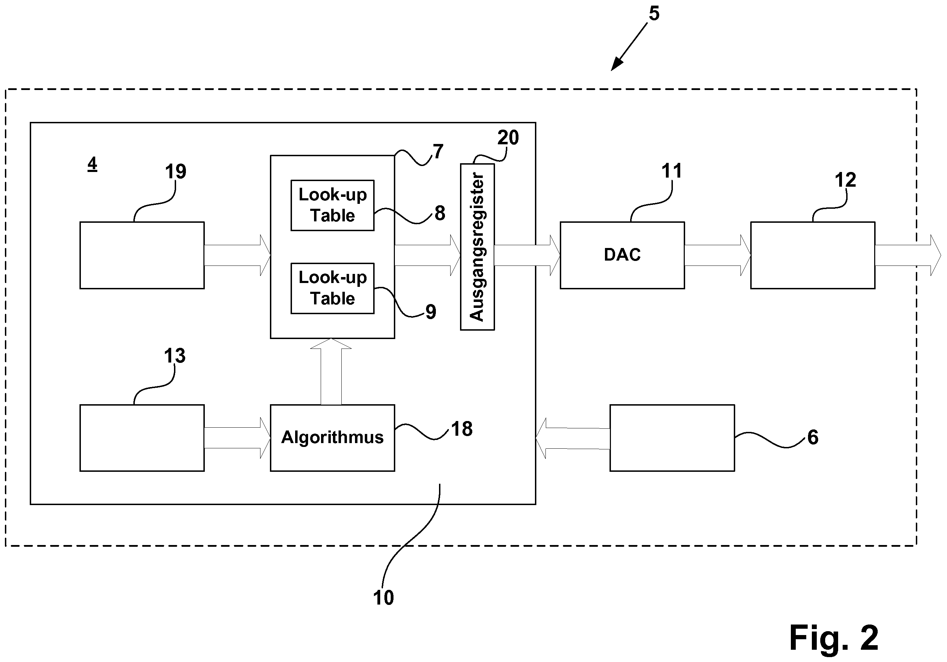

Fig. 2 zeigt ein Blockschaltbild des Aufbaus einer bevorzugten Variante des Signalgenerators 5. Der Signalgenerator 5 besteht aus einer Steuer- und/oder Recheneinheit 4, dem Digital-Analog Wandler (DAC) 11 und einer statischen Filtereinheit 12. Bevorzugt ist die Steuer- und/oder Recheneinheit auf einem FPGA 10 realisiert. Die Steuer- und/oder Recheneinheit 4 kann auch noch weitere Aufgaben, z.B. im Bereich der Signalauswertung, übernehmen und auch aus mehreren Komponenten bestehen, auf die die einzelnen Aufgaben aufgeteilt werden.

Die Steuer- und/oder Recheneinheit 4 besteht prinzipiell aus zwei Teilbereichen: den Komponenten, die die mindestens eine Suchtabelle 8; 9 - im dargestellten Fall werden zwei Suchtabellen 8, 9 verwendet - in der Speichereinheit 7 erzeugen, und den Komponenten, die für die Signalausgabe verantwortlich sind.

Für die Erzeugung der Suchtabellen 8, 9 in der Speichereinheit 7 wird ein Rechenalgorithmus 18 verwendet. Zusätzlich greift der Rechenalgorithmus 18 auf die Register 13 zu, die die notwendigen Informationen für die Berechnung der Amplitudenwerte des zu erzeugenden periodischen Signals enthalten. Diese Register 13 werden von der Steuer-/Recheneinheit 4 je nach benötigter Frequenz und Amplitude angepasst.

Die Erzeugung des Signals wird durch den Adresszähler 19, die Speichereinheit 7 und den DAC 11 durchgeführt. Der Adresszähler zählt hierbei die verwendeten Adressen der entsprechenden Suchtabelle(n) 8, 9-durch und die gespeicherten Daten werden anschließend durch den Digital-Analog-Wandler 11 ausgegeben.

Der Signalgenerator 4 ermöglicht es, die Sondeneinheit 14 eines kapazitiven Messgeräts 1 mit einer Vielzahl an unterschiedlichen, diskreten Frequenzen zu beaufschlagen und somit die Performance der kapazitiven Messung hinsichtlich Ansatzverhalten, Sondenlänge und/oder Mediumseigenschaften zu verbessern. Analoges gilt für ein vibronisches Messgerät. Verwiesen wird in diesem Zusammenhang auf die bereits zuvor zitierte WO 2010/ 0139 508 A1.

Erfindungsgemäß wird eine statische Filtereinheit 12 zur Signalerzeugung eingesetzt, die gegenüber einem dynamisch anpassbaren Signalfilter sehr kostengünstig ist.

Die Speichereinheit 7 der in Fig. 2 gezeigten Ausgestaltung des Signalgenerators 5 weist im gezeigten Fall zwei Suchtabellen 8, 9 auf. Dies ermöglicht es, eine Berechnung und Speicherung der Abtastpunkte für eine erste Signalfrequenz parallel zur Ausgabe einer zweiten Signalfrequenz durchzuführen. Hierdurch lässt sich die Verzögerungszeit zwischen der Ausgabe von zwei Signalfrequenzen minimieren.

### Bezugszeichen liste

- 1: kapazitives Messgerät
- 2: Sondeneinheit
- 3: Elektronikeinheit
- 4: Steuer-/Recheneinheit / Mikrocontroller / DSP / Microprozessor
- 5: Signalgenerator
- 6: Taktgeber
- 7: Speichereinheit
- 8: Look-up table
- 9: Look-up table
- 10: FPGA
- 11: Digital-Analog-Wandler DAC
- 12: Statische Filtereinheit
- 13: Register
- 14: Sondenelektrode
- 15: Isolierung
- 16: Behälter
- 17: Medium
- 18: Algorithmus
- 19: Adresszähler
- 20: Ausgangsregister

## Patentansprüche

1. Messvorrichtung der Automatisierungstechnik mit einem Signalgenerator zur Erzeugung periodischer Signale, wobei die Signale aufeinanderfolgende, diskrete Signalfrequenzen aufweisen, die innerhalb eines vorgegebenen Frequenzbereichs liegen, wobei der Signalgenerator aufweist:
- eine Steuer- und/oder Recheneinheit (4);
- einen Taktgeber (6), wobei der Taktgeber (6) eine konstante Abtastfrequenz zur Verfügung stellt, die größer ist als die maximale diskrete Signalfrequenz in dem vorgegebenen Frequenzbereich;
- eine Speichereinheit (7), in der zu jeder der diskreten Signalfrequenzen die Amplitudenwerte der entsprechenden periodischen Signale in Abhängigkeit von der Abtastfrequenz gespeichert oder speicherbar sind,
wobei die Steuer- und/oder Recheneinheit (4) die gespeicherten Amplitudenwerte der diskreten Signalfrequenzen sukzessive mit der Abtastfrequenz des Taktgebers (6) aus der Speichereinheit (7) ausliest und die periodischen Signale erzeugt oder zur Erzeugung weiter reicht; und
- eine statische Filtereinheit (12) mit einer Grenzfrequenz, die über der maximalen Signalfrequenz liegt und die die durch die Abtastung verursachten Frequenzanteile entfernt,
wobei in der Speichereinheit (7) zu jeder der diskreten Signalfrequenzen die Amplitudenwerte des entsprechenden periodischen Signals in Abhängigkeit von der Abtastfrequenz in Form von zumindest einer Suchtabelle (8; 9), einer sog. Lookup Table (LUT), gespeichert oder abspeicherbar sind,
und wobei die Steuer- und/oder Recheneinheit (4) für jede der diskreten Signalfrequenzen eine Look-up Table (8, 9) mit Hilfe eines Algorithmus (18) dynamisch erzeugt.

2. Messvorrichtung nach Anspruch 1 ,
wobei die Speichereinheit (7) eine Integer Delta Implementierung verwendet, bei der die Amplitudenwerte jedes periodischen Signals in äquidistanten Abständen für eine Periode abgelegt sind.

3. Messvorrichtung nach Anspruch 1,
wobei es sich bei dem Algorithmus (18) bevorzugt um einen iterativen oder einen rekursiven Algorithmus handelt.

4. Messvorrichtung nach einem oder mehreren der vorhergehenden Ansprüche,
wobei zumindest zwei Suchtabellen (8, 9) vorgesehen sind, wobei über die ersten Suchtabelle (8) die Ausgabe einer ersten diskreten Signalfrequenz erfolgt, während in der zweiten Suchtabelle (9) die Berechnung und Speicherung der Abtastpunkte für eine zweite diskrete Signalfrequenz parallel erfolgt.

5. Messvorrichtung nach zumindest einem der Ansprüche 1-4,
wobei der Frequenzbereich bevorzugt zwischen 50 kHz und 5 MHz liegt.

6. Messvorrichtung nach zumindest einem der Ansprüche 1-5,
wobei die Abtastfrequenz bevorzugt bei 20 MHz liegt.

7. Messvorrichtung nach zumindest einem der Ansprüche 1-6,
wobei die Steuer-/Recheneinheit (4) die Amplitudenwerte des vom Signalgenerator (5) erzeugten periodischen Ausgangssignals durch Anpassung des Algorithmus (18) variiert oder einstellt und/oder
wobei die Steuereinheit- und/oder Recheneinheit (4) die gespeicherten Amplitudenwerte durch eine binäre Schiebeoperation eines Ausgangsregisters (20) in ihrer Größe variiert oder einstellt.

8. Messvorrichtung nach zumindest einem der Ansprüche 1-7,
wobei die Steuer- und/oder Recheneinheit (4) die Amplitudenwerte des vom Signalgenerator (5) erzeugten periodischen Ausgangssignals derart korrigiert, dass eine Amplitudenänderunc infolge einer frequenzabhängigen Dämpfung durch die statische Filtereinheit (12) oder durch anderweitige Störeffekte zumindest näherungsweise kompensiert wird.

9. Messvorrichtung nach zumindest einem der Ansprüche 1-8,
wobei es sich bei der Messvorrichtung um eine Vorrichtung (1) zur kapazitiven Bestimmung und/oder Überwachung des Füllstands oder des Grenzstands eines Mediums (17) in einem Behälter (16) mit einer Sondeneinheit (2) mit mindestens einer Sondenelektrode (14) und mit einer Elektronikeinheit (3), die die zumindest eine Sondenelektrode (14) mit einem elektrischen Messsignal beaufschlagt und ein elektrisches Antwortsignal von der Sondeneinheit (14) empfängt und auswertet,
wobei die Elektronikeinheit (3) die zumindest eine Sondenelektrode (14) zumindest zeitweise mit einem Messsignal beaufschlagt, welches mehrere innerhalb eines vorgebbaren Frequenzbereichs liegende, aufeinander folgende, diskrete Signalfrequenzen aufweist, wobei der Signalgenerator (5) die diskreten Signalfrequenzen erzeugt und wobei der Signalgenerator (5) der Elektronikeinheit (3) zugeordnet ist, wobei die Elektronikeinheit (3) anhand der aufeinanderfolgenden, diskreten Signalfrequenzen eine für aktuelle Anwendungsparameter optimale Signalfrequenz ermittelt, und wobei die Elektronikeinheit (3) anhand des zu der optimalen Signalfrequenz gehörigen Antwortsignals den Füllstand oder den Grenzstand des Mediums (17) in dem Behälter (16) oder eine anderweitige physikalische Prozessgröße bestimmt.

10. Messvorrichtung nach Anspruch 9,
wobei die Elektronikeinheit (3) zumindest teilweise auf einem FPGA 10 implementiert ist.

11. Messvorrichtung nach Anspruch 10,
wobei auf dem FPGA (10) die Komponenten für die Erzeugung der zumindest einen Suchtabelle (8; 9) implementiert sind.

12. Messvorrichtung nach zumindest einem der Ansprüche 1-8,
wobei es sich bei der Messvorrichtung um eine vibronische Vorrichtung zur Bestimmung oder Überwachung eines vorbestimmten Füllstandes, der Phasengrenze oder der Dichte eines Mediums in einem Behälter mit einer schwingfähigen Einheit,
wobei die schwingfähige Einheit auf der Höhe des vorbestimmten Füllstandes angebracht ist, wobei eine Steuer- und/oder Recheneinheit vorgesehen ist, die die schwingfähige Einheit mittels eines Frequenzsuchlaufs (Sweep) innerhalb eines vorbestimmbaren Frequenzbereichs im Arbeitsbereich der schwingfähigen Einheit sukzessive mit aufeinander folgenden diskreten Signalfrequenzen zu Schwingungen anregt,
wobei der Signalgenerator den Frequenzsuchlauf durchführt,
wobei eine Sende-/Empfangseinheit die entsprechenden Schwingungen der schwingfähigen Einheit in Form von Empfangssignalen empfängt,
wobei die Steuer- und/oder Recheneinheit über den Frequenzsuchlauf die Signalfrequenz ermittelt, bei der die schwingfähige Einheit mit einer Schwingfrequenz schwingt, die eine vorgegebene Phasenverschiebung zwischen dem Sendesignal und dem Empfangssignal aufweist,
und wobei eine Sende-/Empfangseinheit die schwingfähige Einheit mit der ermittelten Signalfrequenz zu Schwingungen anregt oder wobei die Steuer- und/oder Recheneinheit den nachfolgenden Frequenzsuchlauf startet.

## Claims

1. Measuring apparatus used in automation technology with a signal generator for the generation of periodic signals, wherein the signals have consecutive, discrete signal frequencies which are within a predefined frequency range, wherein the signal generator comprises:
- a control and/or computing unit (4);
- a clock (6), wherein said clock makes a constant scanning frequency available which is greater than the maximum discrete signal frequency in the predefined frequency range;
- a memory unit (7), in which the amplitude values of the corresponding signals are saved, or can be saved, for each of the discrete signal frequencies, depending on the scan frequency,
wherein the control and/or computing unit (4) gradually reads the saved amplitude values of the discrete signal frequencies out of the memory unit (7) at the scanning frequency of the clock (6) and generates the periodic signals or forwards them for generation; and
- a static filter unit (12) with a limit frequency which is above the maximum signal frequency and which removes the frequency components caused by the scanning,
wherein the amplitude values of the corresponding periodic signals are saved, or can be saved, in the memory unit (7) depending on the scanning frequency in the form of at least one search table (8, 9), known as a look-up table (LUT),
and wherein the control and/or computing unit (4) dynamically generates a look-up table (8, 9) for each of the discrete signal frequencies with the aid of an algorithm (18).

2. Measuring apparatus as claimed in Claim 1,
wherein the memory unit (7) uses an integer delta implementation where the amplitude values of each periodic signal are saved at equidistant intervals for a period.

3. Measuring apparatus as claimed in Claim 1,
wherein the algorithm (18) is preferably an iterative or a recursive algorithm.

4. Measuring apparatus as claimed in one or more of the previous claims,
wherein at least two look-up tables (8, 9) are provided, wherein a first discrete signal frequency is output via the first look-up table (8), while the scanning points for a second discrete signal frequency are calculated and saved in the second look-up table (9).

5. Measuring apparatus as claimed in at least one of the Claims 1 to 4,
wherein the frequency range is preferably between 50 kHz and 5 MHz.

6. Measuring apparatus as claimed in at least one of the Claims 1 to 5,
wherein the scanning frequency is preferably at 20 MHz.

7. Measuring apparatus as claimed in at least one of the Claims 1 to 6,
wherein the control/computing unit (4) varies or regulates the amplitude values of the periodic output signal generated by the signal generator (5) by adapting the algorithm (18), and/or
wherein the control unit and/or the computing unit (4) varies or regulates the saved amplitude values by means of a binary shifting operation of an output register (20).

8. Measuring apparatus as claimed in at least one of the Claims 1 to 7,
wherein the control and/or computing unit (4) corrects the amplitude values of the periodic output signal generated by the signal generator in such a way that a change in the amplitude resulting from a frequency-dependent attenuation is compensated for at least approximately by the static filter unit (12) or by other interference effects.

9. Measuring apparatus as claimed in at least one of the Claims 1 to 8,
wherein the measuring apparatus is an apparatus (1) for the capacitive determination and/or monitoring of the level or the limit value of a medium (17) in a vessel (16) with a probe unit (2) with at least one probe electrode (14) and with an electronic unit (3), which supplies an electrical measuring signal to the at least one probe electrode (14) and receives and evaluates an electric response signal from the probe unit (14), wherein the electronic unit (3) at least intermittently supplies a measuring signal to the at least one probe electrode (14), wherein said measuring signal has several consecutive discrete signal frequencies which are within a predefinable frequency range, wherein the signal generator (5) generates the discrete signal frequencies and wherein the signal generator (5) is assigned to the electronic unit (3), wherein the electronic unit (3) determines an optimum signal frequency for current application parameters using the consecutive, discrete signal frequencies, and wherein the electronic unit (3) determines the level or level limit of the medium (17) in the vessel (16) or another physical measured variable using the response signal associated with the optimum signal frequency.

10. Measuring apparatus as claimed in Claim 9,
wherein the electronic unit (3) is implemented at least in part on an FPGA (10).

11. Measuring apparatus as claimed in Claim 10,
wherein the components for generating the at least one look-up table (8, 9) are implemented on the FPGA (10).

12. Measuring apparatus as claimed in at least one of the Claims 1 to 8,
wherein the measuring apparatus is a vibronic apparatus designed to determine and/or monitor a predefined level, the phase limit or the density of a medium in a vessel with a unit capable of oscillation, wherein the unit capable of oscillation is fitted at the height of the predefined level, wherein a control and/or computing unit is provided which, by means of a frequency sweep within a predefinable frequency range in the working range of the unit capable of oscillation, excites the unit capable of oscillation to vibrate gradually with consecutive discrete signal frequencies,
wherein the signal generator performs the frequency sweep,
wherein a transmission/reception unit receives the corresponding oscillations of the unit capable of oscillation in the form or reception signals, wherein, on the basis of the frequency sweep, the control and/or computing unit determines the signal frequency at which the unit capable of oscillation oscillates at an oscillation frequency that has a predefined phase shift between the transmission signal and the reception signal,
and wherein a transmission/reception unit causes the unit capable of oscillation to vibrate at the determined signal frequency and wherein the control and/or computing unit starts the subsequent frequency sweep.

## Revendications

1. Dispositif de mesure de la technique d'automatisation avec un générateur de signaux destiné à la génération de signaux périodiques, les signaux présentant des séquences discrètes consécutives, qui se situent dans une gamme de fréquence prédéfinie, le générateur de signaux comprenant :
- une unité de commande et/ou de calcul (4) ;
- une horloge (6), l'horloge mettant à disposition une fréquence d'échantillonnage constante, laquelle est supérieure à la fréquence de signal discrète maximale dans la gamme de fréquence prédéfinie ;
- une unité de mémoire (7), dans laquelle sont enregistrées ou peuvent être enregistrées, pour chacune des fréquences de signal discrète, les valeurs d'amplitude des signaux périodiques correspondant en fonction de la fréquence d'échantillonnage,
pour lequel l'unité de commande et/ou de calcul (4) lit successivement les valeurs d'amplitudes des fréquences de signal discrètes à partir de l'unité de mémoire (7) et génère les signaux périodiques ou les transmet pour la génération ; et
- une unité de filtre statique (12) avec une fréquence de coupure située au-delà de la fréquence de signal maximale et qui élimine les composantes de fréquence générées par l'échantillonnage,
pour lequel sont enregistrées ou peuvent être enregistrées dans l'unité de mémoire (7), pour chacune des fréquences de signal discrètes, les valeurs d'amplitude du signal périodique correspondant, en fonction de la fréquence d'échantillonnage sous la forme d'au moins une table de recherche (8, 9) ("Look-up Table" - LUT),
et pour lequel l'unité de commande et/ou de calcul génère de façon dynamique, pour chacune des fréquences de signal discrètes, une table de recherche (8, 9) à l'aide d'un algorithme (18).

2. Dispositif de mesure selon la revendication 1,
pour lequel l'unité de mémoire (7) utilise une implémentation Integer Delta, pour laquelle les valeurs d'amplitude de chaque signal périodique sont enregistrées à des intervalles équidistants pour une période.

3. Dispositif de mesure selon la revendication 1,
pour lequel il s'agit de préférence, concernant l'algorithme (18), d'un algorithme itératif ou d'un algorithme récursif.

4. Dispositif de mesure selon l'une ou plusieurs des revendications précédentes,
pour lequel sont prévues au moins deux tables de recherche (8, 9), la sortie d'une première fréquence de signal discrète s'effectuant via la première table de recherche (8), tandis que dans la deuxième table de recherche (9) a lieu, en parallèle, le calcul et la mémorisation des points d'échantillonnage pour une deuxième fréquence de signal discrète.

5. Dispositif de mesure selon au moins l'une des revendications 1 à 4,
pour lequel la gamme se situe de préférence entre 50 kHz et 5 MHz.

6. Dispositif de mesure selon au moins l'une des revendications 1 à 5,
pour lequel la fréquence d'échantillonnage se situe de préférence à 20 MHz.

7. Dispositif de mesure selon au moins l'une des revendications 1 à 6,
pour lequel l'unité de commande et/ou de calcul (4) varie ou règle les valeurs d'amplitude du signal de sortie périodique généré par le générateur de signaux (5) via l'adaptation de l'algorithme (18), et/ou
pour lequel l'unité de commande et/ou de calcul (4) varie ou règle, dans leur grandeur, les valeurs d'amplitudes enregistrées via une opération de décalage binaire d'un registre de sortie (20).

8. Dispositif de mesure selon au moins l'une des revendications 1 à 7,
pour lequel l'unité de commande et/ou de calcul (4) corrige les valeurs d'amplitude générées par le générateur de signaux (5) de telle sorte qu'un changement d'amplitude dû à un amortissement dépendant de la fréquence est compensé au moins approximativement par l'unité de filtre statique (12) ou par d'autres effets perturbateurs.

9. Dispositif de mesure selon au moins l'une des revendications 1 à 8,
pour lequel il s'agit, concernant le dispositif de mesure, d'un dispositif (1) destiné à la détermination capacitive et/ou la surveillance du niveau ou du seuil d'un produit (17) dans un réservoir (16) avec une unité de sonde (2) avec au moins une électrode de sonde (14) et avec une unité électronique (3), qui alimente l'au moins une électrode de sonde (14) avec un signal de mesure électrique, et reçoit et exploite un signal de réponse électrique provenant de l'unité de sonde (14), dispositif pour lequel l'unité électronique (3) alimente l'au moins une électrode de sonde (14) au moins temporairement avec un signal de mesure, lequel présente plusieurs fréquences de signal discrètes consécutives, situées dans une gamme de fréquence prédéfinissable, le générateur de signaux (5) générant les fréquences de signal discrètes et le générateur de signaux (5) étant attribué à l'unité électronique (3), l'unité électronique (3) déterminant au moyen de fréquences de signal discrètes consécutives une fréquence de signal optimale pour les paramètres actuels de l'application, et l'unité électronique (3) déterminant au moyen du signal de réponse correspondant à la fréquence de signal optimale le niveau ou le seuil du produit (17) dans le réservoir (16) ou une autre grandeur process physique.

10. Dispositif de mesure selon la revendication 9,
pour lequel l'unité électronique (3) est implémentée au moins partiellement sur un FPGA (10).

11. Dispositif de mesure selon la revendication 10,
pour lequel les composants destinés à générer l'au moins une table de recherche (8, 9) sont implémentés sur le FPGA (10).

12. Dispositif de mesure selon au moins l'une des revendications 1 à 8,
pour lequel il s'agit, concernant le dispositif de mesure, d'un dispositif vibronique destiné à la détermination ou la surveillance d'un niveau prédéterminé, de la limite de phase ou de la masse volumique d'un produit dans un réservoir avec une unité apte à vibrer,
l'unité apte à vibrer étant installée à la hauteur du niveau prédéfini, une unité de commande et/ou de calcul étant prévue, laquelle fait entrer successivement en vibrations l'unité apte à vibrer au moyen d'un balayage de fréquence ("Sweep") à l'intérieur d'une gamme de fréquence prédéfinissable, dans la zone de travail de l'unité apte à vibrer, avec des fréquences de signal discrètes consécutives,
le générateur de signaux exécutant le balayage de fréquence,
l'unité d'émission / de réception recevant les vibrations correspondantes de l'unité apte à vibrer sous la forme de signaux de réception,
l'unité de commande et/ou de calcul déterminant par le biais du balayage de fréquence la fréquence de signal, à laquelle l'unité apte à vibrer vibre avec une fréquence de vibration, qui présente un décalage de phase prédéfini entre le signal d'émission et le signal de réception,
et une unité d'émission / de réception faisant entrer l'unité apte à vibrer en vibrations à la fréquence de signal déterminée ou l'unité de commande et/ou de calcul démarrant le balayage de fréquence suivant.
